# EUROPEAN PATENT SPECIFICATION

(11) **EP 2 825 970 B1**
(45) Date of publication and mention of the grant of the patent: **17.11.2021**
(21) Application number: 13760828.7
(22) Date of filing: 27.02.2013
(51) Int. Cl.: G06F 15/16, H04L 29/08

(54) **APPARATUS AND METHOD FOR MANAGING CONTENT FOR CLOUD COMPUTING**
VORRICHTUNG UND VERFAHREN ZUR VERWALTUNG VON CLOUD-COMPUTING-INHALTEN
APPAREIL ET PROCÉDÉ DE GESTION DE CONTENU POUR INFORMATIQUE EN NUAGE

(30) Priority: 12.03.2012 KR 20120025131
(43) Date of publication of application: 21.01.2015
(73) Proprietor: Samsung Electronics Co., Ltd., Suwon-si, Gyeonggi-do 443-742 (KR); Korea Advanced Institute of Science and Technology, Daejeon 305-701 (KR)
(72) Inventor: PARK, Yong-Suk, Seoul 137-949 (KR); KIM, Sun-Mi, Seoul 135-521 (KR); YOUN, Chan-Hyun, Daejeon 302-791 (KR); SUNG, Dan-Keun, Daejeon 305-707 (KR); KIM, Jin-Won, Seoul 137-937 (KR); KANG, Dong-Ki, Daejeon 305-701 (KR); KIM, Hee-Jae, Daejeon 305-701 (KR); PARK, Yong-Sung, Daejeon 302-845 (KR); HAN, Young-Joo, Daejeon 305-701 (KR); KIM, Tae-Hoon, Daejeon 305-772 (KR); CHA, Ji-Young, Jeju-si Jeju-do 690-824 (KR)
(74) Representative: HGF
(86) International application number: PCT/KR2013/001593
(87) International publication number: WO 2013/137573

(56) References cited:
- US-A1- 2011 022 812
- US-A1- 2011 078 303
- US-A1- 2011 131 309
- US-A1- 2011 276 713
- US-A1- 2011 289 329
- US-A1- 2011 307 523
- US-A1- 2012 047 107
- None

## Description

### Technical Field

The present invention relates generally to a cloud service and a cloud computing. More particularly, the present invention relates to an apparatus and a method for managing content for cloud computing.

### Background Art

A cloud service or a cloud computing is a service allowing to use IT resources such as computing, storage, and network, via Internet necessary and to pay per use, and represents a computing technology for providing IT related services such as data storage, processing, network and content use all together from a server in the Internet represented in a cloud-like shape.

The home cloud environment provides cloud infrastructures (computing and storage) which interwork with the home using the network technology, and users pay a certain usage fee according to the provided resource amount and a service level to thus manage content. Such a home cloud does not merely store and manage digital content such as document, music, photo, and video used by devices such as computer, tablet PC, notebook, smartphone, and television (TV) in the home only to a home device and a local server of the limited size, but stores the content to a cloud storage server connected to a home cloud gateway server. Hence, unlimited virtual resources can be dynamically provided, and the user can store, view, and update the content by accessing his/her cloud storage from web-capable places in and outside the home. In addition, when an unpredicted home device trouble or damage arises, safe content management can be achieved by backing important content or data up to the cloud storage of high reliability.

Related art including Korean Patent Publication Application No. 2010-0137323 (December 30, 2010) relating to the conventional home content management describes a structure for managing multimedia content in association with the home network and the web and connecting to the device such as digital TV, or suggests an abstract structure for determining whether the local server or the cloud server processes and stores the content when the user wants to store or view the content in association with the cloud infrastructure.

However, in recent, when using the cloud resources, the user usually utilizes different cloud resources rather than using the single cloud resource of a particular company. The related arts which suggest the interworking method of the existing home and the cloud resource do not consider different service levels provided by the cloud resources.

Thus, what is needed is a method for not only storing and viewing the content when the content is managed in the home interworking with the heterogeneous cloud infrastructures but also automatically selecting the cloud server from various cloud infrastructures for the content storage by considering the user's required service level and preference. For the content viewing, a content provision method for selecting the cloud server of optimal Quality of Service (QoS) needs to be considered.

US patent application number 2011/289329 A1 (Bose Sumit Kumar et al) describes a system and method of distributing applications across multiple clouds with the aim of reducing power consumption. The method described involves multiple clouds with smart meters, which provide up-to-date information on electricity costs, and a broker to determine which applications to distribute to which clouds. The use of peak power consumption times in deciding how applications should be migrated across the cloud environment is described. Costs involved in the transfer and data traffic are also considered.

US patent application number 2011/131309 A1 (Akiyama Kazuhito et al) describes a method for dynamically updating a service level agreement, including storing a preference for service selection. The method involves acquiring a usage level of multiple services based on respective SLAs and selecting one service.

US patent application number 2011/022812 A1 (Van der Linden Rob et al) describes systems and methods for establishing a cloud bridge between two virtual storage resources and for transmitting data from one to the other. A storage delivery management service that receives user credentials which are used to identify a storage adapter is also described.

US patent application number 2011/0078303 A1 (Li Li Erran et al) describes a system of load-balancing over a cloud environment. The system involves a series of cloud servers and local servers. Load balancers are used to distribute work amongst the servers (both local and cloud) to improve overall performance and cost. The scalability of the system, and the addition or removal of servers in the network is also discussed.

### Disclosure of Invention

Embodiments of the invention are set out in the appended claims.

### Solution to Problem

To address the above-discussed deficiencies of the prior art, it is a primary aspect of the present invention to provide an apparatus and a method for managing a cloud storage for storing and selecting content in a cloud service system.

Another aspect of the present invention is to provide an apparatus and a method for, when storing content from a user to a cloud storage, selecting a cloud storage according to a request of the user and storing the content to the selected cloud storage in a cloud service system.

Yet another aspect of the present disclosure is to provide an apparatus and a method for selecting intended content to view among contents stored to a cloud storage more rapidly in a cloud service system.

Still another aspect of the present disclosure is to provide an apparatus and a method for selecting content to be viewed among contents stored to some other devices than a cloud storage, or a home cloud gateway more rapidly in a cloud service system.

According to one aspect of the present disclosure, a gateway of a cloud service system which includes at least one user device, a plurality of clouds for providing different cloud services, and the gateway connected between the user device and the clouds, includes an information table for storing predefined Service Level Agreement (SLA) information; and a controller for selecting at least one of the clouds according to the SLA information and storing content provided from the user device to the selected cloud.

According to another aspect of the present disclosure, a gateway of a cloud service system which includes at least one user device, a plurality of clouds for providing different cloud services, and the gateway connected between the user device and the clouds, includes a calculator for calculating a response time for each of the clouds; and a selector for, when the user device requests to view content, selecting clouds in an ascending order of the response time from clouds storing the requested content, requesting the content stored to the selected clouds, and providing the content to the user device.

According to yet another aspect of the present disclosure, a gateway of a cloud service system which includes at least one user device, a plurality of clouds for providing different cloud services, and the gateway connected between the user device and the clouds, includes a verifier for, when the user device requests to view content, verifying clouds storing the content; and a selector for selecting the cloud from the verified clouds in an ascending order of a response time, requesting the content stored to the selected clouds, and providing the content to the user device.

According to still another aspect of the present disclosure, a method for storing content in a gateway of a cloud service system which includes at least one user device, a plurality of clouds for providing different cloud services, and the gateway connected between the user device and the clouds, includes selecting at least one of the clouds according to predefined SLA information; and storing content provided from the user device, to the selected cloud.

According to a further aspect of the present disclosure, a method for selecting content in a gateway of a cloud service system which includes at least one user device, a plurality of clouds for providing different cloud services, and the gateway connected between the user device and the clouds, includes calculating a response time for each of the clouds; and when the user device requests to view content, selecting clouds from clouds storing the requested content in an ascending order of the response time, requesting the content stored to the selected clouds, and providing the content to the user device.

According to a further aspect of the present disclosure, a method for selecting content in a gateway of a cloud service system which includes at least one user device, a plurality of clouds for providing different cloud services, and the gateway connected between the user device and the clouds, includes when the user device requests to view content, verifying clouds storing the content; selecting clouds from the verified clouds in an ascending order of a response time; and requesting the content stored to the selected clouds and providing the content to the user device.

Other aspects, advantages, and salient features of the disclosure will become apparent to those skilled in the art from the following detailed description, which, taken in conjunction with the annexed drawings, discloses exemplary embodiments of the disclosure.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIG. 1 illustrates a cloud service system according to an exemplary embodiment of the present disclosure;
FIG. 2 illustrates a home cloud service system according to an exemplary embodiment of the present disclosure;
FIG. 3 illustrates a home cloud gateway for storing and selecting content according to an exemplary embodiment of the present disclosure;
FIG. 4 illustrates a content storing method according to an exemplary embodiment of the present disclosure;
FIGS. 5 and 6 illustrate the content storing method of FIG. 4;
FIG. 7 illustrates a method for selecting the stored content according to an exemplary embodiment of the present disclosure;
FIGS. 8, 9 and 10 illustrate the method for selecting the stored content of FIG. 7;
FIG. 11 illustrates a cloud service system for selecting the stored content according to another exemplary embodiment of the present disclosure;
FIG. 12 illustrates a home cloud gateway for selecting the stored content according to another exemplary embodiment of the present disclosure;
FIG. 13 illustrates a hash table of FIG. 12;
FIG. 14 illustrates a method for selecting the stored content according to another exemplary embodiment of the present disclosure;
FIG. 15 illustrates a general hash tree used to select the stored content according to another exemplary embodiment of the present disclosure;
FIGS. 16 through 17C illustrate hash trees generated and verified in the stored content selection according to another exemplary embodiment of the present disclosure;
FIG. 18 illustrates a HCGHT field of the hash table of FIG. 13;
FIG. 19 illustrates a modification of the cloud service system for selecting the stored content according to another exemplary embodiment of the present disclosure;
FIG. 20 illustrates information exchanged between the home cloud gateways of FIG. 19; and
FIG. 21 illustrates the home cloud gateway of FIG. 19.
Throughout the drawings, like reference numerals will be understood to refer to like parts, components and structures.

### Best Mode for Carrying out the Invention

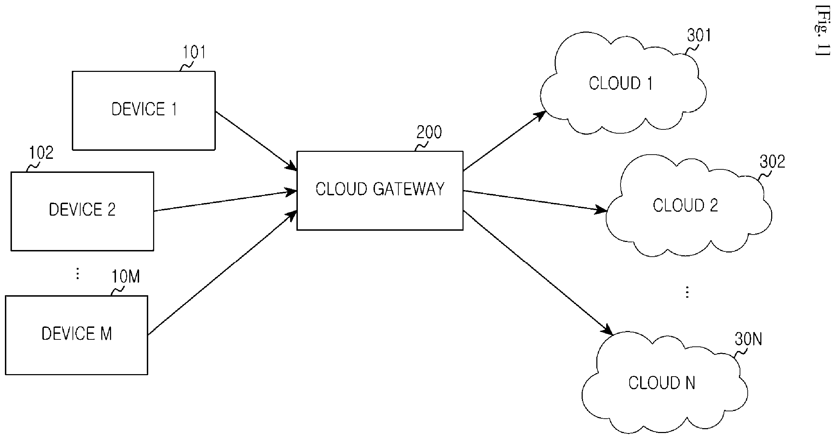

FIGURES 1 through 21, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged network system. The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

FIG. 1 illustrates a cloud service system according to an exemplary embodiment of the present disclosure. The cloud service system includes a plurality of user devices 101 through 10M, a plurality of clouds 301 through 30N forproviding different cloud services, and a cloud gateway 200 connected between the user devices and the clouds. Herein, the singe cloud gateway 200 is equipped and connected with the M-ary user devices and the N-ary clouds by way of example. The user devices include a computer, a tablet PC, a notebook, a smartphone, and a television (TV). Using the user device, a user can directly input or edit digital content such as document, music, photo, and video, and the input content can be transmitted and stored to storages of the clouds via the cloud gateway 200. The digital content are stored to the storages of the clouds in the form of multi-copies or replica. The user may request to view the stored digital content using the user device.

The gateway, to be explained, can be referred to as a home cloud gateway as the gateway disposed in the home based on the home; that is, as the gateway which mediates between the user device of the home and several clouds. Yet, the cloud gateway according to exemplary embodiments of the present disclosure is not confined to the home because the cloud gateway of the present disclosure can be the gateway which mediates between the user device in the office and the clouds. Accordingly, the cloud gateway may be referred to as the home cloud gateway or a home cloud gateway server of the same meaning. The cloud may be referred to as a cloud storage, a cloud server or a cloud storage server, and the digital content may be referred to as content, data, and multi-copies of the content.

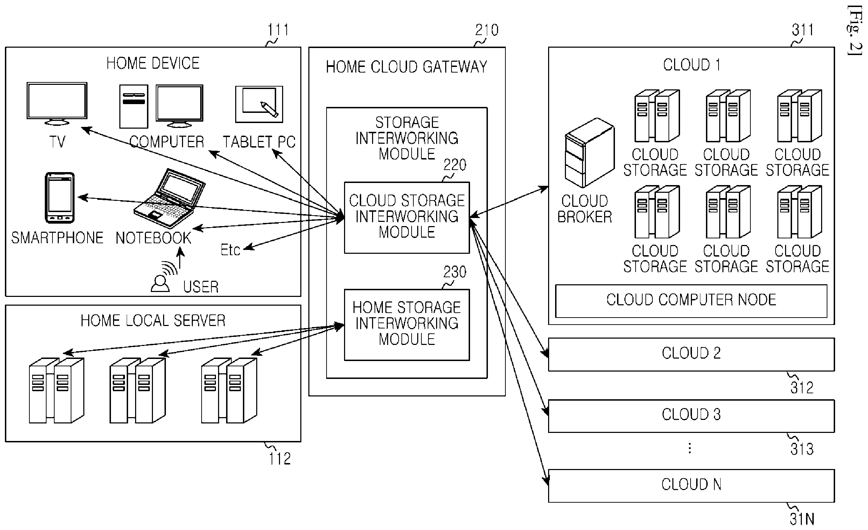

FIG. 2 illustrates a home cloud service system according to an exemplary embodiment of the present disclosure. In the home cloud environment, a home device 111 such as TV, computer, tablet PC, refrigerator, and washer, and a home local server 112 build the home infrastructure. The cloud infrastructure includes a plurality of clouds 311 through 31N for providing different cloud services or web storage services. The cloud can include a plurality of cloud storages (or cloud storage servers), a cloud broker, and a cloud computer node as in the cloud 311.

A home cloud gateway 210 serves as an intermediary for connecting the home infrastructure and the heterogeneous cloud infrastructure. The home cloud gateway 210 includes a storage interworking module for interworking with the heterogeneous cloud infrastructure or the storage service provided in the home infrastructure. A cloud storage interworking module 220 of the storage interworking module interworks with the storage service provided in the cloud infrastructure, and a home storage interworking module 230 interworks with the storage service provided in the home infrastructure.

When the user requests the cloud storage service, the home cloud gateway 210 stores the multi-copy or the replica of the corresponding content on the cloud storage or the home local server (or the home storage). When the user requests to view the content, the home cloud gateway 210 selects the cloud storage or the home storage storing the corresponding content and provides the content stored to the selected storage to the user. The content storing and the content selection are performed in the cloud storage interworking module 220 and the home storage interworking module 230 of the home cloud gateway 210.

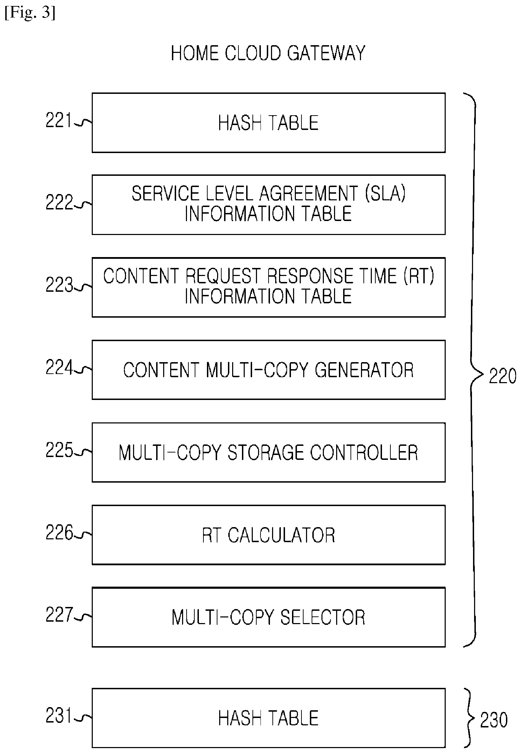

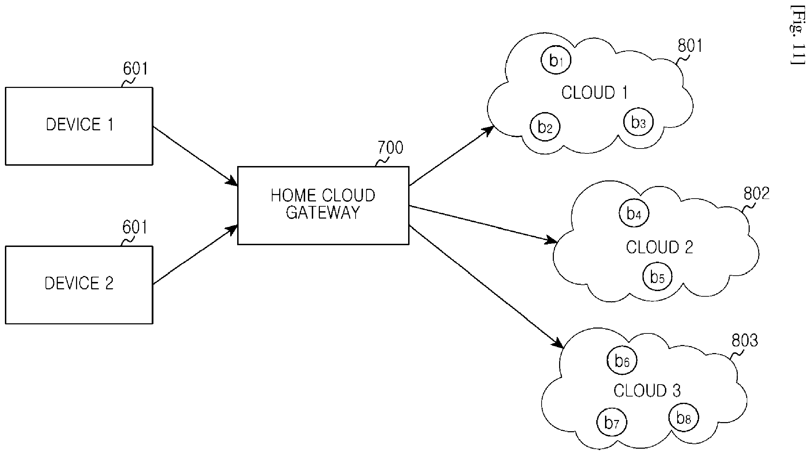

The operations of the present disclosure, to be explained, are divided into the content storing and the stored content selection according to an exemplary embodiment of the present disclosure, and the stored content selection according to another exemplary embodiment of the present disclosure. The content storing and the content selection according to an exemplary embodiment of the present disclosure shall be explained by referring to FIGS. 3 through 10, and the stored content selection according to another exemplary embodiment of the present disclosure shall be explained by referring to FIGS. 11 through 21.

### < Content storing and selection >

FIG. 3 illustrates function blocks of the home cloud gateway for storing and selecting the content according to an exemplary embodiment of the present disclosure. The cloud storage interworking module 220 of the home cloud gateway 210 includes a hash table 221, a Service Level Agreement (SLA) information table 222, a content request Response Time (RT) information table 223, a content multi-copy generator 224, a multi-copy storage controller 225, a RT calculator 226, and a multi-copy selector 227.

According to an exemplary embodiment of the present disclosure, when the user requests the cloud storage service, the home cloud gateway 210 stores the corresponding content on the cloud storage. When the user requests to store the content such as document, photo, music, and video through the home device 111 including the display in the home, the home cloud gateway 210 connected to the home device 111 receives the content storage request and generates the multi-copy of the requested content. The home cloud gateway 210 distributes and stores the generated multiple copies of the content on at least one of the cloud storages, and stores the distributed storage result on the hash table 221 of the cloud storage interworking module 220.

The hash table 221, the SLA information table 222, the content multi-copy generator 224, and the multi-copy storage controller 225 are the component for storing the corresponding content on the cloud storage when the user requests the cloud storage service.

The hash table 221 stores the information of the multi-copy of the content requested by the user and the cloud storing the multi-copy. Indexes of the hash table 221 correspond to the content, and the information of the content multi-copy and the cloud is managed in the form of a linked list. The SLA information table 222 stores predefined SLA information. The SLA information can include information about a service usage fee. The information table 222 stores the service usage fee information and storage capacity information of the clouds. The content multi-copy generator 224 generates the multi-copy of the content provided from the user device. The multi-copy storage controller 225 selects at least one of the clouds according to the SLA information, and stores the content provided from the user device to the selected cloud. The multi-copy storage controller 225 selects the cloud from the clouds in the ascending order of the service usage fee. When the available capacity of the selected cloud is smaller than the content size, the multi-copy storage controller 225 selects the cloud of the second lowest service usage fee. The information table 222 can be generated and updated according to the value input by the user through the user device or provided from the clouds.

When the user requests to view the content, the home cloud gateway 210 selects the cloud storage storing the corresponding content and provides the user with the content stored to the selected cloud storage. When the user requests to view the content such as document, photo, music and video through the home device 111 including the display in the home, the home cloud gateway 210 connected to the home device 111 receives the content viewing request and searches for the corresponding index value of the hash table 221 by calculating a hash value of the request content. The home cloud gateway 210 selects one of the cloud storages storing the content based on the linked list indicating the multi-copy storage location of the content indicated by the index value, and provides the user with the content stored to the selected storage.

The hash table 221, the content request RT information table 223, the RT calculator 226, and the multi-copy selector 227 are the components for selecting the cloud storage storing the corresponding content when the user requests to view the content, and for providing the user with the content stored to the selected cloud storage.

The hash table 221 stores the information of the clouds storing the content on the content basis. The content request RT information table 223 stores a calculation result of the RT of each cloud. The RT calculator 226 calculates the RT of each cloud. More specifically, the RT calculator 226 requests test content stored on the clouds on a preset periodic basis, calculates the RT until receiving the test content, and stores the RTs of the clouds to the RT information table 223. The test content is stored to the connected cloud every time a new cloud storage service is connected. The multi-copy selector 227 stores the requested content when the user device requests the content viewing, selects the clouds on the ascending order of the RT, requests the content stored to the selected clouds, and provides the content to the user device.

The home storage interworking module 230 of the home cloud gateway 210 includes only the hash table 223 in FIG. 3. However, to store and view the digital content from the user, the home storage interworking module 230 can include the hash table, a content multi-copy generatorier, a multi-copy storage controller, and a multi-copy selector similar to the cloud storage interworking module 220.

### < Content storage >

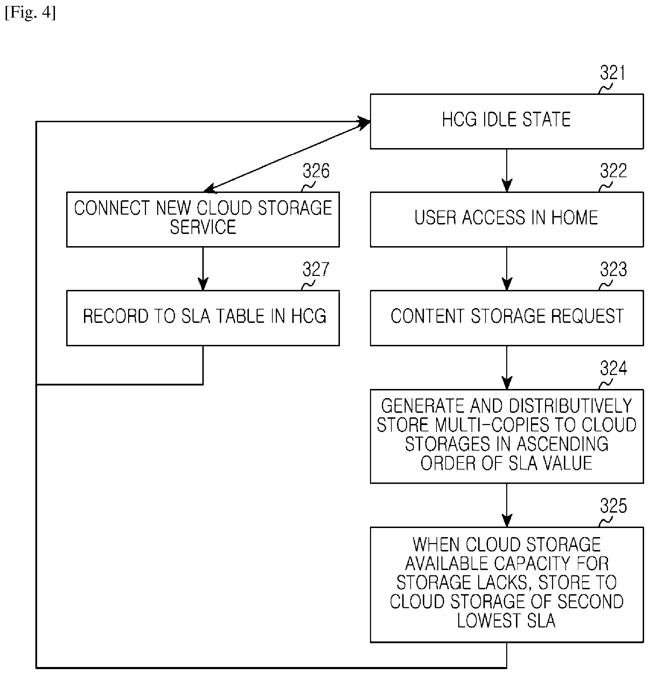

FIG. 4 illustrates a content storing method according to an exemplary embodiment of the present disclosure. The operations are performed in the home cloud service of FIGS. 2 and 3.

Every time a new cloud infrastructure is connected in step 326, the home cloud gateway 210 fetches and records the SLA value provided from the corresponding cloud infrastructure to the SLA information table 222 in step 327.

When the user in the home requests to store the content through the home device 111 in steps 322 and 323, the content multi-copy generator 224 of the home cloud gateway 210 generates the multi-copy of the requested content and the multi-copy storage controller 225 selects at least one corresponding cloud storage based on the values of the SLA information table 222 and distributively stores the generated multi-copy of the content to the selected cloud storage in step 324. For example, the multi-copy storage controller 225 of the home cloud gateway 210 selects the cloud storage in ascending order of the SLA value based on the values of the SLA information table 222. When the available capacity of the selected cloud storage lacks, the multi-copy storage controller 225 selects the cloud storage of the next lower SLA value and stores the generated multicopy of the content on the selected cloud storage in step 325. This multi-copy content storing operation may be performed on the single cloud storage or multiple cloud storages according to the available capacity of the cloud storage.

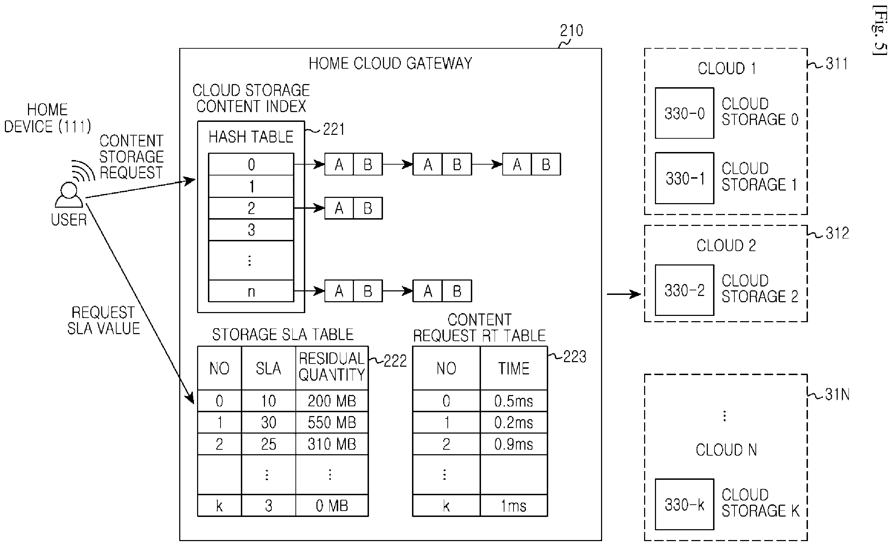

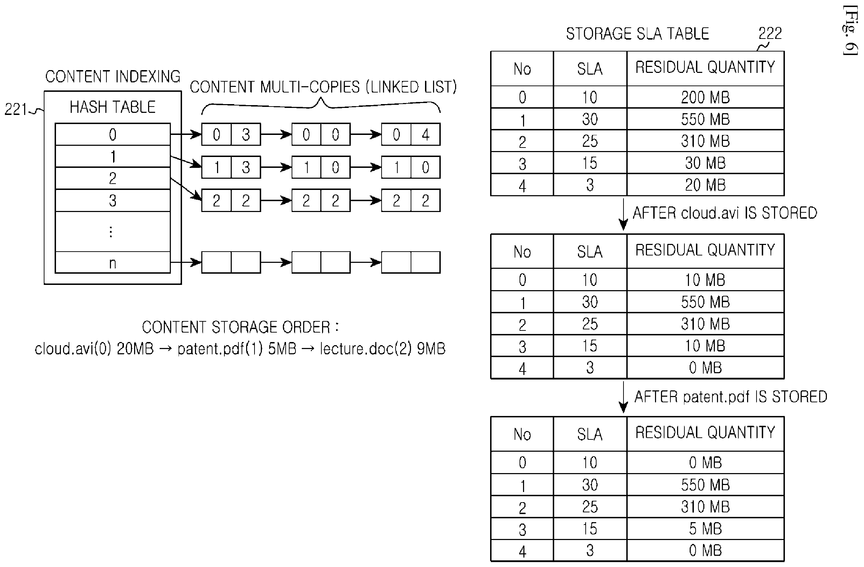

FIGS. 5 and 6 illustrate the content storing method of FIG. 4. This method is performed in the cloud service system including the home device 111, the home cloud gateway 210, and a plurality of clouds 311 through 31N. The N-ary clouds 311 through 31N include (k+1)-ary cloud storages 0 through k. For example, of the clouds 311 through 31N, the cloud 311 includes two cloud storages 330-0 and 330-1, the cloud 312 includes one cloud storage 330-2, and the cloud 31N includes the cloud storage 330-k.

Every time a new cloud storage is connected, the home cloud gateway 210 records the SLA value provided from the corresponding cloud storage to the SLA information table 222 (steps 326 and 327 of FIG. 4). The SLA value can be received from a cloud service provider or entered by the user in person when the new cloud storage is connected. For example, the SLA value can be a service usage fee (cost/byte). The SLA value can vary according to the user's demand. The SLA information table 222 includes a cloud storage number which interworks with the home cloud gateway 210, the SLA values, and available capacity information schema. For example, the 0-th cloud storage has the SLA value of 10 and the available capacity of 200 Mbytes, the first cloud storage has the SLA value of 30 and the available capacity of 550 Mbytes, the second cloud storage has the SLA value of 25 and the available capacity of 310 Mbytes, and the k-th cloud storage has the SLA value of 3 and the available capacity of 0 Mbytes.

When the user requests to store his/her content on the cloud storage through the home device 111, the home cloud gateway 210 receives the content storage request and calculates and records the hash value of the requested content to the hash table 221 (in step 323 of FIG. 4). Next, the content multi-copy generator 224 of the home cloud gateway 210 generates the multi-copy of the requested content, and the multi-copy storage controller 225 distributively stores the generated multi-copy of the content on at least one of the connected cloud storage servers (step 324). In so doing, the multi-copy storage controller 225 of the home cloud gateway 210 selects the cloud storage in ascending order of the service usage fee which is the predefined SLA value by inspecting the values of the SLA information table 222, and distributively stores the multi-copy of the requested content to the selected cloud storage. When the available capacity of the selected cloud storage server is not enough to store the multi-copy, the multi-copy storage controller 225 of the home cloud gateway 210 selects the cloud storage of the next lower SLA value and stores the multi-copy of the requested content to this selected cloud storage (step 325).

The home cloud gateway 210 manages the stored multi-copy of the content in the form of the linked list. The linked list includes a field A and a field B as shown in FIG. 5. The reference letter "A" represents an ID of the multi-copy as the region storing the content key value. The reference letter "B" represents the storage location of the corresponding multi-copy as the region storing the cloud storage number.

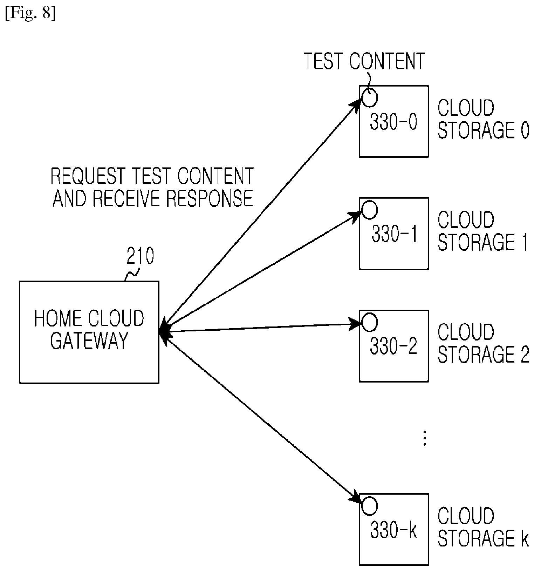

The home cloud gateway 210 manages the content request RT information table 223 as well as the SLA information table 222. The content request RT information table 223 is used to manage the RS of the request when the user requests to view the content, which shall be explained in detail by referring to FIGS. 8, 9 and 10.

FIG. 6 illustrates the storage SLA information table 221 referred when the content is stored on the cloud storage. It is provided that five cloud storages are connected to the home cloud gateway 210 and three content multi-copies are generated for the content storage. The user is assumed to store video content cloud.avi (hash value : 0, size : 20 MB), document content patent.pdf (hash value : 1, size : 5 MB) and document content lecture.doc (hash value : 2, size : 9 MB) on the cloud storage in this order.

To store the video content, cloud.avi, the home cloud gateway 210 calculates the hash value of the content (hash value : 0), and generates and links the linked list to the corresponding hash value location of the hash table 221. Next, the home cloud gateway 210 generates the multi-copies of the video content and refers to the storage SLA information table 222. Since the cloud storage with the lowest SLA value (service usage fee) is the fourth storage and its storage available capacity is 20 MB, the home cloud gateway 210 stores the first copy of the video content on the fourth cloud storage. As the first copy of the video content is stored, the fourth cloud storage has no more residual storage capacity.

To store the second copy of the video content, the home cloud gateway 210 identifies the storage with the lowest SLA value among the cloud storages excluding the fourth storage. The zeroth storage has the lowest SLA value among the cloud storages excluding the fourth storage and its available capacity is 30 MB. Hence, the home cloud gateway 210 stores the second copy of the video content on the zeroth storage. As the second copy of the video content is stored, the available capacity of the -zeroth cloud storage becomes 10 MB.

To store the third copy of the video content, the home cloud gateway 210 identifies the third storage with the lowest SLA value among the cloud storages excluding the fourth and zeroth storages. The third storage has the lowest SLA value among the cloud storages excluding the fourth and zeroth storages and its available capacity is 30 MB. Hence, the home cloud gateway 210 stores the third copy of the video content to the identified third storage. The multi-copies of the video content cloud.avi are distributively stored to the fourth, zeroth and third cloud storages.

Next, to store the document content, patent.pdf, the home cloud gateway 210 calculates the hash value of the content (the hash value is 1), and generates and links the linked list to the hash value location of the hash table 221. Next, the home cloud gateway 210 generates the multi-copies of the document content and refers to the storage SLA information table 222. Among the clouds excluding the fourth cloud storage having no available capacity, the zeroth cloud storage has the lowest storage SLA value (service usage fee) and its storage available capacity is 10 MB. Accordingly, the home cloud gateway 210 stores the first copy of the document content to the zeroth cloud storage. As the first copy of the document content is stored, the available capacity of the zeroth cloud storage becomes 5 MB.

To store the second copy of the document content, the home cloud gateway 210 identifies the storage with the lowest SLA value among the cloud storages excluding the fourth storage. The zeroth storage has the lowest SLA value and its available capacity is 5 MB. Hence, the home cloud gateway 210 stores the second copy of the document content on the zeroth storage. As the second copy of the document content is stored, the available capacity of the zeroth cloud storage becomes 0 MB.

To store the third copy of the document content, the home cloud gateway 210 identifies the third storage with the lowest SLA value among the cloud storages excluding the fourth and zeroth storages. The home cloud gateway 210 stores the third copy of the document content on the identified third storage. Accordingly, the multi-copies of the document content patent.pdf are distributively stored to the zeroth and third cloud storages.

Next, to store the document, content lecture.doc, the home cloud gateway 210 calculates the hash value of the document (the hash value is 2), and generates and links the linked list to the hash value location of the hash table 221. Next, the home cloud gateway 210 generates the multi-copies of the document content and refers to the storage SLA information table 222. Among the clouds excluding the fourth and first cloud storages having no available capacity, the third cloud storage has the lowest storage SLA value (service usage fee) but its storage available capacity is 5 MB. Accordingly, the home cloud gateway 210 identifies the second cloud storage of the second lowest storage SLA value (service usage fee). Since the available capacity of the second cloud storage is 310 MB, the home cloud gateway 210 stores all of the multi-copies of the document content to the second cloud storage.

As such, when the available capacity of the selected storage is not enough to store the multi-copy, the home cloud gateway 210 selects another storage with the next SLA value and stores the content multi-copy to the selected storage. When all of the multi-copies of the content are stored, the storage locations of the multi-copies are recorded in the linked list which is linked to the hash table 221.

### < An exemplary embodiment of content selection >

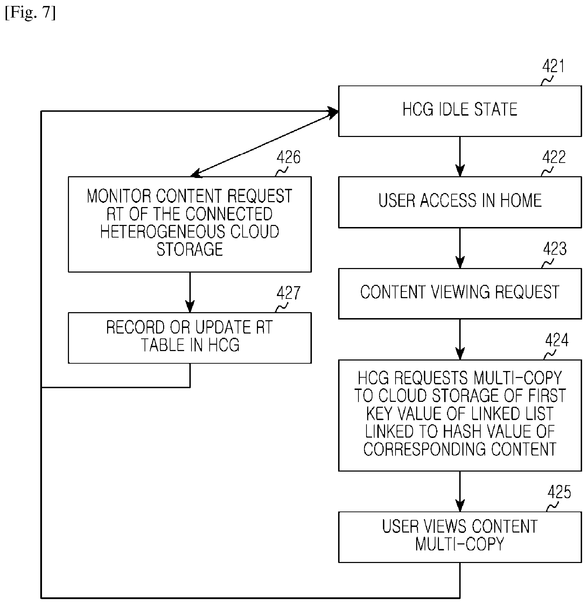

FIG. 7 illustrates a method for selecting the content in the home cloud service system of FIGS. 2 and 3 according to an exemplary embodiment of the present disclosure.

The RT calculator 226 of the home cloud gateway 210 periodically monitors the content request RT from the linked cloud storage in step 426, and records or updates the monitored result value to the content request RT information table 223 in step 427. Based on these, linked list nodes which are linked to the hash table 221 are arranged in ascending order of the content request RT.

Next, when the user requests to view the content to the home cloud gateway 210 through the home device in step 423, the multi-copy selector 227 of the home cloud gateway 210 calculates the hash value of the request content, selects the cloud storage stored to the first node in the linked list which is linked to the hash index value, and requests the content to the selected cloud storage in step 424. In step 425, the multi-copy is provided from the selected cloud storage to the user.

FIGS. 8, 9 and 10 illustrate the method for selecting the stored content of FIG. 7. To record the values of the content request RT table 223 of FIGS. 3 and 5, the home cloud gateway 210 monitors its linked cloud storages 330-0 through 330-k on the periodic basis.

In FIG. 8, when a new cloud storage is connected, the home cloud gateway 210 stores test content arbitrarily generated to the connected cloud storages 330-1 through 330-k. The test content can be determined by considering the type of the content frequently used by the user. When the test content is stored on the cloud storage, the home cloud gateway 210 requests to view the stored test content at predefined regular intervals. When receiving the response of the test content, the home cloud gateway 210 measures the time between the request and the received response and stores the measured value to the content request RT table 223. When the value is already stored to the content request RT table 223, the home cloud gateway 210 updates the previously stored value with the new value measured.

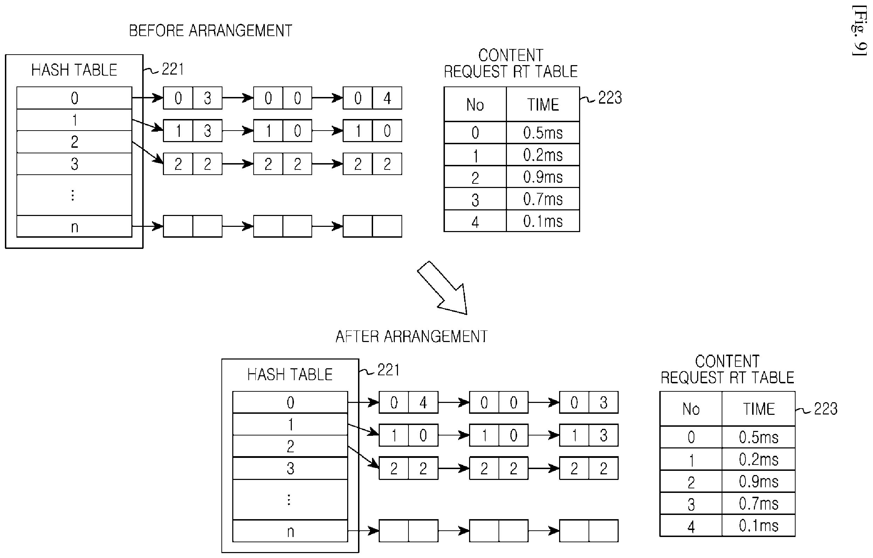

In FIG. 9, the home cloud gateway 210 arranges the linked list which is linked to the hash index values of the hash table 221 in ascending order of the measured content request RT. Hence, the location information of the storage of the fastest content request RT is stored to the first node of the linked list which is linked to the hash index values.

For example, the linked list linked to the zeroth hash index value of the hash table 221 is in the order of the third storage (the content request RT, 0.7 ms) → the zeroth storage (the content request RT, 0.5 ms) → the fourth storage (the content request RT, 0.1 ms) before the arrangement, whereas it is arranged in the order of the fourth storage (the content request RT, 0.1 ms) → the zeroth storage (the content request RT, 0.5 ms) → the third storage (the content request RT, 0.7 ms) after the arrangement. For example, the linked list linked to the first hash index value of the hash table 221 is in the order of the third storage (the content request RT, 0.7 ms) → the zeroth storage (the content request RT, 0.5 ms) → the zeroth storage (the content request, RT 0.5 ms) before the arrangement, whereas it is arranged in the order of the zeroth storage (the content request RT, 0.5 ms) → the zeroth storage (the content request RT, 0.5 ms) → the third storage (the content request RT, 0.7 ms) after the arrangement. Meanwhile, since the nodes of the linked list which is linked to the second hash index value of the hash table 221 contain the same storage location information (the second storage), the arrangement maintains the same order.

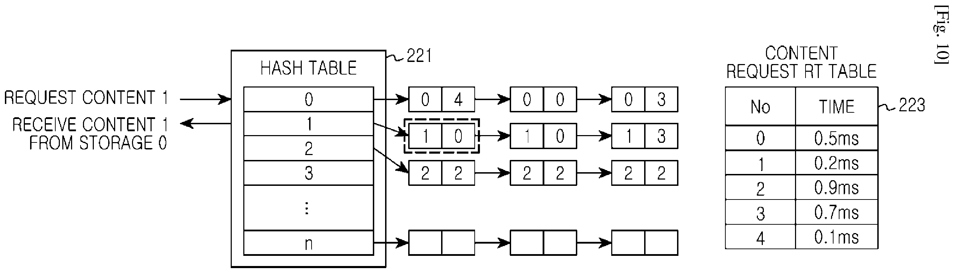

In FIG. 10, when the user requests the content, the home cloud gateway 210 calculates the hash value of the requested content, refers toconsults the index value of the hash table 221, and requests the cloud storage stored to the first node of the linked list linked to the index value to view the multi-copy of the content. The cloud storage stored to the first node of the linked list is compared with the other cloud storages storing the same multi-copy and the fastest content request RT is provided. Thus, the user can view the content by selecting the cloud storage which provides the content most rapidly.

For example, when the user requests the first document content patent.pdf, the home cloud gateway 210 refers to the index value of the hash table 221 for the requested content, selects the 0-th cloud storage stored to the first node in the linked list, and requests the selected 0-th cloud storage to view the multi-copy of the document content.

As stated earlier, it is possible to meet the user's cloud storage selection policy and to minimize the request RT when the content viewing is requested, using the home cloud gateway server in the home which interworks with the heterogeneous cloud infrastructure. In addition, since the home cloud gateway server automatically operates, the user's direct intervention is not required and the user's required QoS can be satisfied easily. Since there is no need to inspect or modify the internal structure of the cloud infrastructure, it can be effectively used in association with the heterogeneous cloud infrastructure. Hence, the user can use various cloud infrastructures for the efficient content management.

### < Another exemplary embodiment of content selection >

Verification in the cloud environment is used for the client to check whether his/her data is stored on the cloud, and to check whether the cloud service providers abide by the contract. For example, the verification is necessary when the cloud service providers do not store the multi-copies or the replicas on the cloud as many as the client wants. Hence, the processing of the multi-copies in the cloud should be different from the processing of the multi-copies in other device. While the verification in processing the multi-copies in the cloud can reduce the redundant operation, the devices of the gateway do not require the verification.

For the cloud environment, it is effective that the multi-copy processing of the data in the cloud is different from the multi-copy processing of the data in the device of the gateway. According to another exemplary embodiment of the present disclosure, to be explained, an effective method for searching for the optimal multi-copy is provided by flexibly selecting the multi-copy according to whether the multi-copy is contained in the cloud or the device.

FIG. 11 illustrates a cloud service system for selecting the content according to another exemplary embodiment of the present disclosure. The cloud service system includes two devices 601 and 602, a plurality of clouds 801, 802 and 803 for providing different cloud services, and a home cloud gateway 700 interconnected between them. The home cloud gateway 700 acts as a broker for delivering the content (or the data) between the devices and between the device and the cloud. The home cloud gateway 700 includes the hash table therein for the stored content selection, and all of the contents in the home cloud gateway 700 are managed using the hash table. The hash table shall be described below.

When the user requests to store digital content in the home device 601, the home cloud gateway 700 requests to store the content with sending the content to the clouds 801, 802 and 803. As shown in FIG. 11, multicopies b₁, b₂ and b₃ of the content can be stored to the first cloud 801, multi-copies b₄ and b₅ of the content can be stored to the second cloud 802, and multi-copies b₆ , b₇ and b₈ of the content can be stored to the third cloud 803. The home cloud gateway 700 may directly store the content, instead of the cloud, or the requested content may be stored to the other device 602 registered to the home cloud gateway 700 or the home storage (or the home local server) of FIG. 2.

According to another exemplary embodiment of the present disclosure, when the user requests to view certain content in the home device 601, the home cloud gateway 700 determines whether the requested content is stored on the connected cloud, the home cloud gateway 700, or the other registered device. When the multi-copy of the requested content is stored to the other device, the home cloud gateway 700 selects the multi-copy of the shortest RT using estimation. When the content is stored on the cloud, the home cloud gateway 700 verifies the cloud and selects the multi-copy of the shortest RT at the same time.

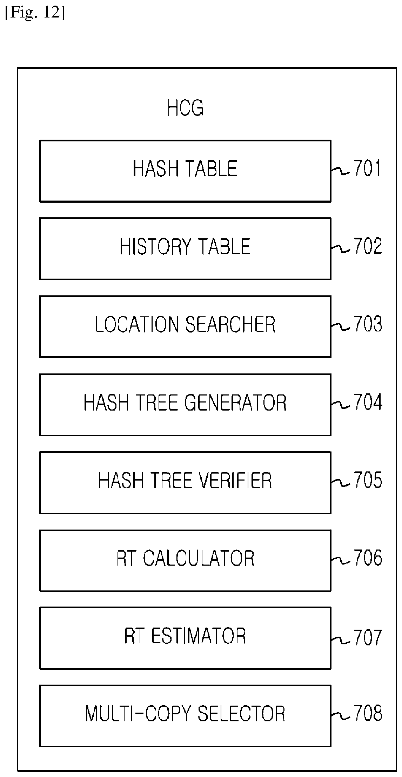

FIG. 12 illustrates function blocks of the home cloud gateway for selecting the stored content according to another exemplary embodiment of the present disclosure. The Home Cloud Gateway (HCG) 700 includes a hash table 701, a history table 702, a location searcher 703, a hash tree generator 704, a hash tree verifier 705, an RT calculator 706, an RT estimator 707, and a multi-copy selector 708.

The hash table 701 stores the information of the clouds storing the content on the content basis and the information of the RT from the content request to the response when the content is requested to the cloud. The location searcher 703 determines whether the multi-copies of the content are stored on the cloud, other device, or the HCG itself. The determination is conducted by checking a Location field of the hash table 701. The hash tree generator 704 generates a hash tree using the multi-copy information and a result value by applying a hashing function to the multi-copy information. The hash tree verifier 705 verifies the cloud. In detail, the hash tree verifier 705 verifies the cloud by comparing a first hash tree generated by the hash tree generator 704 and its generated second hash tree. The second hash tree is generated by the hash tree verifier 705 by requesting and receiving the content information to and from the corresponding cloud when the user device requests to view the content, and using the received content information and its content information. The RT calculator 706 calculates the response time RT from sending a request for the cloud verification to receiving the information. The RT estimator 707 estimates the device of the shortest RT by referring to the hash table 701. The multi-copy selector 708 selects the clouds from the verified clouds in ascending order of the RT, requests the content stored to the selected clouds, and provides the content to the user device.

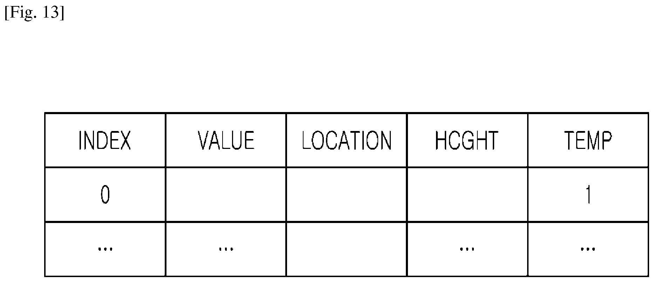

FIG. 13 illustrates the hash table 701 of FIG. 12. The hash table includes an Index field, a Value field, a Location field, a HCG History Table (HCGHT) field, and a Temp field. The Location field indicates the locations storing the content, that is, indicates whether the multi-copy of the content is stored on the cloud or other device. The HCGHT field indicates the RT up to the storage location of the corresponding multi-copies in the home cloud gateway. The HCGHT field is used to search for the multi-copy of the optimal RT. When the Location field indicates the cloud, the HCGHT field stores only one recent RT. By contrast, when the Location field indicates the other device, the HCGHT field is arranged to serve as a log for recording the current RT. The Temp field corresponds only to the multi-copy stored on the cloud. For example, as the pre-calculated RT signifies that the cloud is already verified, the calculated RT is used and the Temp field value is increased. When the Temp field reaches a certain value, the cloud is not verified over several times. In this case, the cloud is verified.

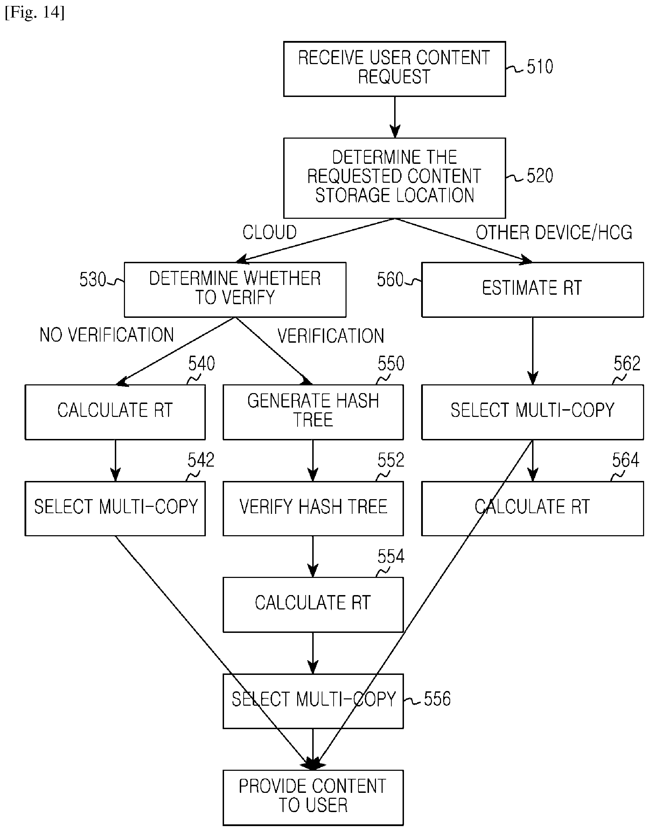

FIG. 14 illustrates a method for selecting the stored content according to another exemplary embodiment of the present disclosure. The method can be divided to a flow when the multi-copy of the content is stored on the cloud (steps 530, 540, 542, and 550 through 556), and a flow when the multi-copy is stored to the other device or the home cloud gateway (steps 560 through 564).

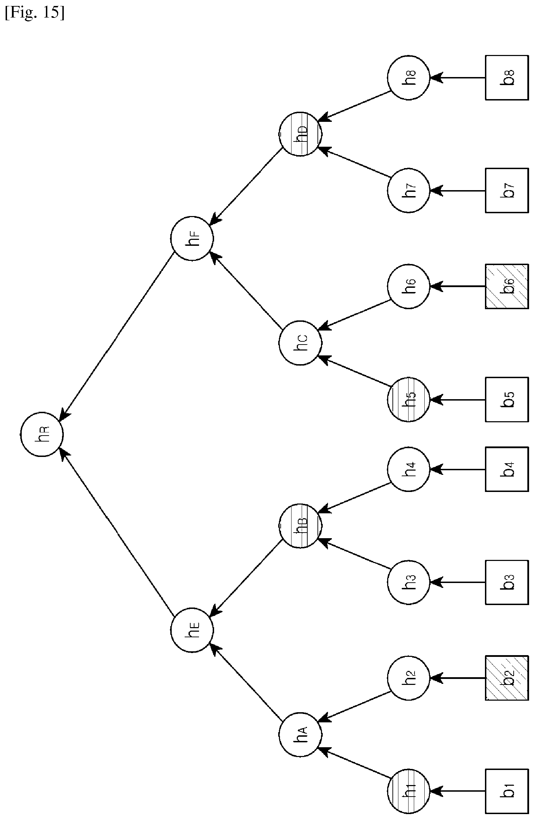

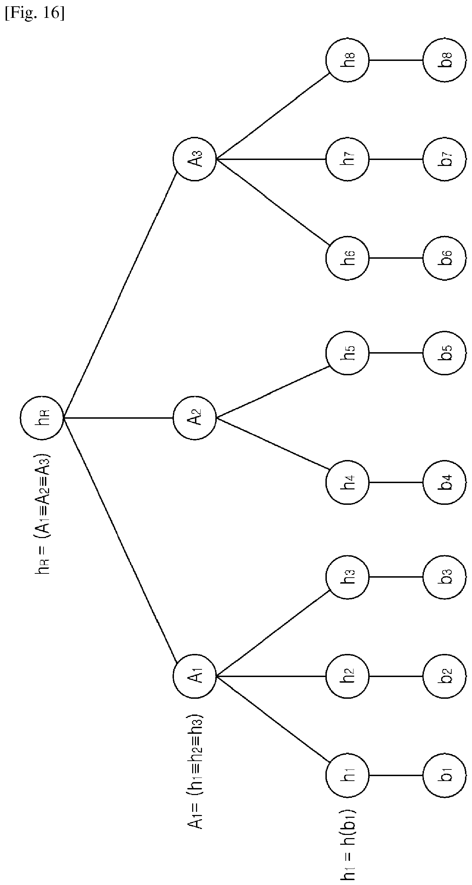

FIG. 15 illustrates a general hash tree used to select the stored content according to another exemplary embodiment of the present disclosure. FIGS. 16 through 17C illustrate hash trees generated and verified in the stored content selection according to another exemplary embodiment of the present disclosure.

The HCG 700 uses a so-called Merkle hash tree in order to verify the multi-copies in several clouds and to search the optimal multi-copy. The Merkle hash tree, which is one of representative methods for verifying data, is effective when verifying data stored on the block basis. For example, it is assumed that the multi-copies of the content are divided to b₁ through b₈ and stored on the clouds on the block basis as shown in FIG. 11. As shown in FIG. 15, the node of the first level of the Merkle hash tree is calculated as hⱼ=h(bⱼ) , the node of the second level is calculated as h_{A}=h(h₃∥h₄) , and the node (root node) of the third level is calculated as h_{R}=h(h_{E}∥h_{F}).

When the HCG 700 requests to verify the multi-copies b₂ and b₆, the cloud sends h₂ ,h₆ ,A(h₁,h_{B}), and A(h₅,h_{D}) to the HCG 700. Herein, A is an authentication path and used for the HCG 700 to reconstruct the Merkle hash tree. The HCG 700 generates the Merkle hash tree using the information received from the cloud and verifies the cloud by comparing h_{R} generated by the Merkle hash tree and its own h_{R}.

First of all, the operations when the multi-copy is stored on the cloud will be described. When the user requests certain content through the device, for example, the device 601 of FIG. 11, the location searcher 703 of the HCG 700 determines based on the hash table 701 whether the multi-copies of the content are stored on the cloud, the other device, or the HCG in steps 510 and 520. The determination is conducted based on the Location field of the hash table 701.

In step 530, the HCG 700 determines whether the cloud verification is required based on the hash table 701. When the HCGHT field corresponding to each index stores the RT value and the Temp field does not reach a certain value, the RTs are already known and its content is present. Hence, the verification is unnecessary. However, when the HCGHT field corresponding to each index is empty; that is, when the RT value is not stored, the cloud needs to be verified.

When the cloud needs to be verified, the hash tree verifier 705 verifies the cloud and concurrently the RT calculator 706 and the multi-copy selector 708 calculate the RT of each multi-copy and request the optimal multi-copy, which are performed in steps 550 through 556.

In step 550, the hash tree generator 704 of the HCG 700 generates the hash tree. When the multi-copies are stored on the cloud, the hash tree generator 704 calculates the result value hi by applying the hashing function to the multi-copy bi and stores the multi-copy bi and its hashing result value hi=h(bi) on the cloud. The hash tree generator 704 generates the hash tree using the current bi and hi. The generated hash tree is shown in FIG. 16. When generating the hash tree, the hash tree generator 704 stores information of the nodes of the levels of the tree.

The hash tree generator 704 generates the nodes of the first level and the second level using its bi and hi, and then performs Exclusive NOR (XNOR) (or NXOR) (≡) in each stage as shown in exemplary Table 1.

Table 1
[Table 1]

**Table 1**

| Input 1 | Input 2 | XNOR |
|---|---|---|
| 0 | 0 | 1 |
| 0 | 1 | 0 |
| 1 | 0 | 0 |
| 1 | 1 | 1 |

The value of the first node A1 of the third level is determined as h1=h2=h3, the value of the second node A2 is determined as h4=h5, and the value of the third node A3 is determined as h6=h7=h8. The value of the fourth node h_{R} is determined as A1 ≡ A2≡ A3.

In step 552, the hash tree verifier 705 of the HCG 700 verifies the clouds. The HCG 700 has A₁ ,A₂ , and A₃ as the multi-copy information. The HCG 700 requests the hashing function values hᵢ of the multi-copies of the requested content on the clouds 801, 802 and 803. In response to this, the clouds 801, 802 and 803 send hᵢ to the HCG 700. The HCG 700 receives hᵢ, h₂, and h₃ from the cloud 801, h₄ and h₅ from the cloud 802, and h₆ , h₇ , and h₈ from the cloud 803. Next, the hash tree verifier 705 generates the tree using its generated tree, its own A, and hᵢ received from the cloud. The hash tree verifier 705 verifies the cloud by generating some tree structure per cloud. More specifically, the hash tree verifier 705 determines the node value Aᵢ of the next level from the values of hᵢ received from one cloud, and finally calculates the value h_{R} using the determined value Aᵢ and the values of the node corresponding to other clouds. As such, the cloud can be verified by comparing the calculated value h_{R} and the value h_{R} known from the initial tree.

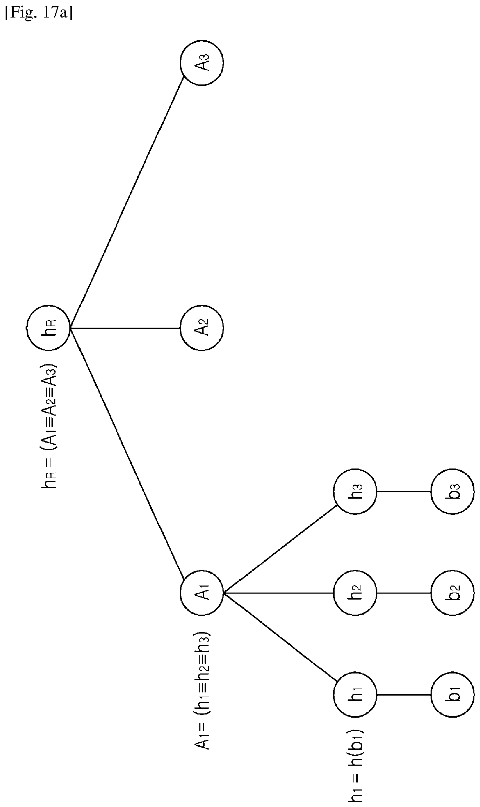

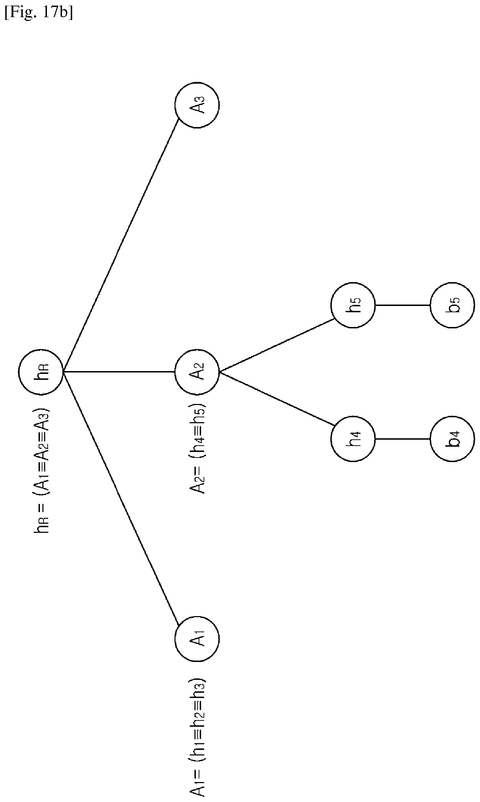

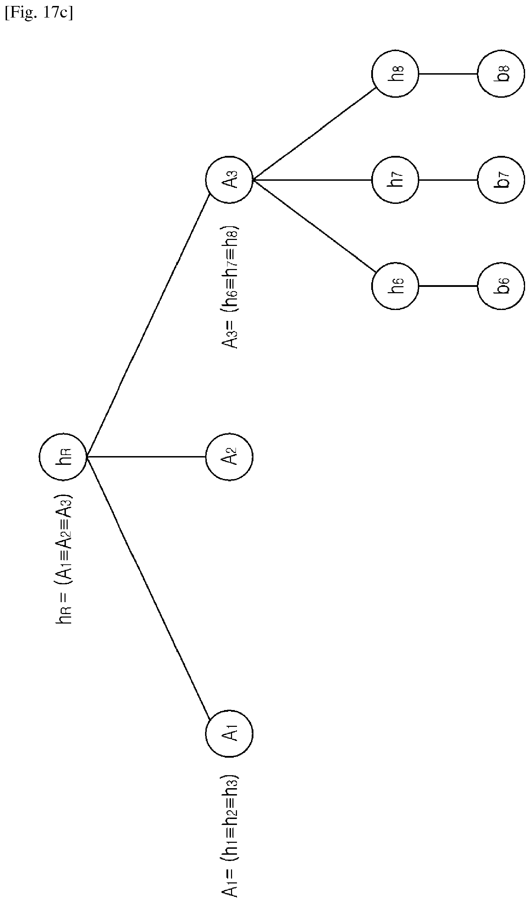

For example, the hash tree verifier 705 determines the node value A₁ of the next level from the values h₁ , h₂, and h₃ received from the cloud 801, finally calculates the value h_{R} using the determined value A₁ and its node values A₂ and A₃ corresponding to the other clouds, and generates the tree of FIG. 17A. The hash tree verifier 705 determines the node value A₂ of the next level from the values h₄ and h₅ received from the cloud 802, finally calculates the value h_{R} using the determined value A₂ and its stage values A₁ and A₃ corresponding to the other clouds, and generates the tree of FIG. 17B. The hash tree verifier 705 determines the node value A₃ of the next level from the values h₆ , h₇ , and h₈ received from the cloud 803, finally calculates the value h_{R} using the determined value A₃ and its node values A₁ and A₂ corresponding to the other clouds, and generates the tree of FIG. 17C.

In step 554, the RT estimator 707 calculates the RT of the cloud using a Round Trip Time (RTT) from sending a request for the cloud verification to receiving the information from the cloud. The calculated RTs are stored in the HCGHT field of the hash table 701 of FIG. 13.

In step 556, the multi-copy selector 708 selects the cloud storage of the shortest RT among the verified clouds by referring to the HCGHT field of the hash table 701, and requests the multi-copy stored to the storage.

When the cloud verification is unnecessary, the RTs for the multi-copy are calculated and then the copy of the content with a minimum RT is requested without the verification, which is performed in steps 540 and 542.

In step 540, the RT calculator 706 calculates the RT by referring to the RT which is calculated previously and stored to the HCGHT field of the hash table 701. In step 542, the multi-copy selector 708 selects the cloud storage of the shortest RT among the verified clouds by referring to the HCGHT field of the hash table 701 and requests the multi-copy stored to the storage.

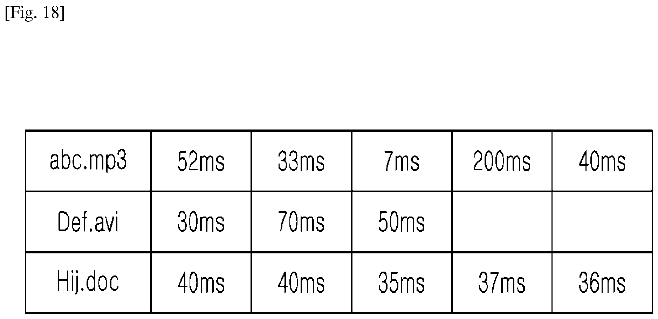

Now, the operations when the multi-copy is stored to the HGC or the other device, rather than the cloud, are explained. These operations consider that the routes of the users of the home device are fixed. For example, the routes can be almost fixed such that father moves along home → office → home, mother moves along home → mart → home, the first child moves along home → school → institute → home, and the second child moves along home → kindergarten → institute → home. In this case, the HCGHT field of the hash table 701 is arranged to serve as the log for recording the past RTs as shown in FIG. 18.

When the user requests the multi-copy, the HCG 700 determines whether the multi-copy is stored to other device, itself, or the cloud in step 520. When the multi-copy is stored to the HCG or the other device, not the cloud, the RT estimator 707 of the HCG 700 estimates the device of the shortest RT by referring to the HCGHT field of the hash table 701. That is, the RT estimator 707 calculates averages of the values in each column of the HCGHT field and selects the smallest average. Next, the HCG 700 calculates and adds the RTT to the HCGHT field. As such, the RT of the devices is estimated based on the HCGHT field, the device of the shortest RT is selected, the content is received from the device and forwarded to the user. Next, the HCT calculates and adds the RT of the devices to the HCGHT field. Such the stored content selection can reduce the load for calculating the RT for every multi-copy.

As stated above, according to the stored content selection according to another exemplary embodiment of the present disclosure, the redundant multi-copy in the cloud can be reduced by concurrently verifying the cloud and calculating the RT, and the multi-copy in the device not belonging to the cloud can be effectively selected using the enhanced RT estimation. When the estimation is not applied, to calculate the RT to select the multi-copy of the shortest RT, it is necessary to send the test packet one by one before providing the data (content) to the user. However, since the HCG calculates the RT after estimating the RT and sending the data to the user in this exemplary embodiment of the present disclosure, the time for the user to receive the data can be shortened.

### < Modification of the stored content selection >

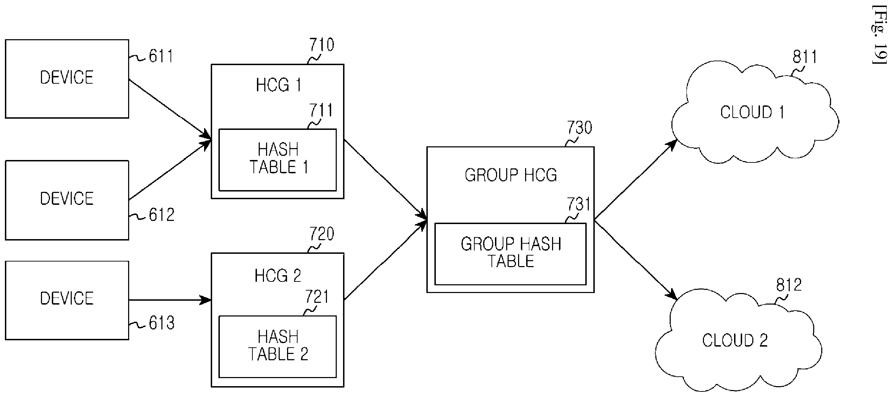

FIG. 19 illustrates a modification of the cloud service system for selecting the stored content according to another exemplary embodiment of the present disclosure. The increased number of the HCGs is considered.

When the number of the HCGs increases, the HCGs need considerable calculations. In this case, it is efficient to group the HCGs. A certain number of the HCGs are grouped and managed by a group HCG which functions as a supernode. In FIG. 19, the group HCG 730 manages two HCGs 710 and 720 and interconnects clouds 811 and 812. Home devices 611 and 612 are connected to the HCG 710, and a home device 613 is connected to the HCG 720. The HCG 710 includes a hash table 711, and the HCG 720 includes a hash table 721.

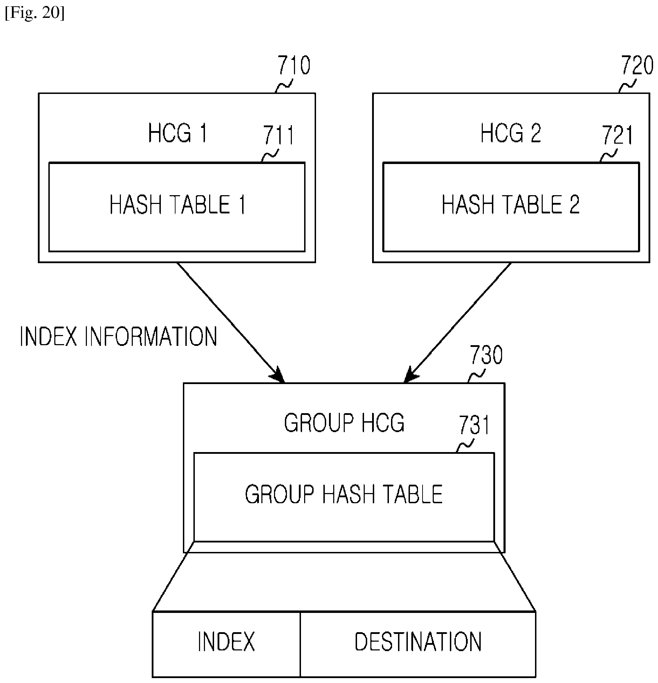

Since the group HCG 730 groups and manages the HCGs, its hash table 731 needs to change differently from the hash table of the general HCG. The group hash table 731 simply includes an Index field and a Destination field as shown in FIG. 20. The Index field, as the result value of the hash function, closely relates to the index of the hash tables 711 and 721 of the HCGs 710 and 720. The Destination field indicates whether the next destination of the group HCG is the HCG or the cloud.

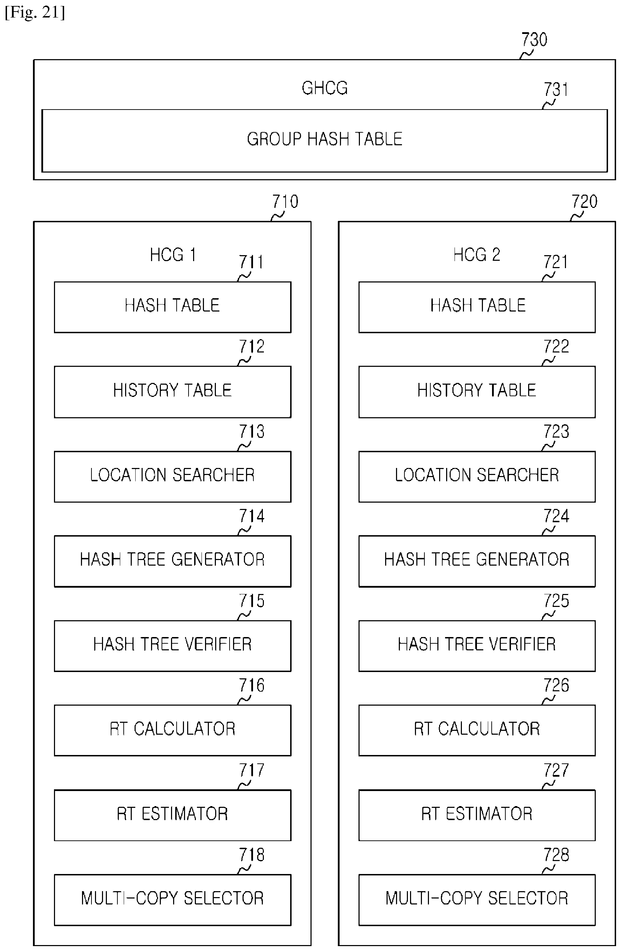

For the operations according to another exemplary embodiment of the present disclosure, the HCGs 710 and 720 can include components of FIG. 21. That is, the HCG1 710 includes the hash table 711, a history table 712, a location searcher 713, a hash tree generator 714, a hash tree verifier 715, an RT calculator 716, an RT estimator 717 and a multi-copy selector 718. The HCG2 720 includes the hash table 721, a history table 722, a location searcher 723, a hash tree generator 724, a hash tree verifier 725, an RT calculator 726, an RT estimator 727 and a multi-copy selector 728.

As mentioned above, according to an exemplary embodiment of the present disclosure, it is possible to meet the user's cloud storage selection policy through the HCG server and to minimize the request RT when requesting to view the content in the home interworking with the heterogeneous cloud infrastructure. Since the HCG server automatically operates, the user's direct intervention is not required and the user's required QoS can be satisfied easily. In addition, since there is no need to obtain or modify the internal structure of the cloud infrastructure, the cloud can be effectively used in association with the heterogeneous cloud infrastructure. Thus, the user can use various cloud infrastructures for the sake of the efficient content management.

According to another exemplary embodiment of the present disclosure, the redundant multi-copy in the cloud can be reduced by concurrently verifying the cloud and calculating the RT, and the multi-copy in the device not belonging to the cloud can be effectively selected using the enhanced RT estimation.

So far, while the disclosure has been shown and described with reference to certain exemplary embodiments thereof, it will be understood by those skilled in the art that various changes in form and details may be made therein without departing from the spirit and scope of the invention as defined by the appended claims and their equivalents. For example, while the home cloud system is adopted in the exemplary embodiments of the present disclosure, the present invention is equally applicable to the cloud gateway in the office, instead of the home.

The operations according to the exemplary embodiments of the present disclosure can be recorded in a computer-readable medium including program instructions for fulfilling the operations in various computers. The computer-readable medium can include program instructions, data files and data structures, in single or in combination. The program instruction may be specially designed and configured for the present disclosure or usable to those well known in the related art. The computer-readable recording medium includes, for example, magnetic media such as hard disk, floppy disk and magnetic tape, optical media such as CD-ROM and DVD, magneto-optical media such as floptical disk, and hardware devices specifically configured to store and execute the program instructions such as ROM, RAM, and flash memory. The program instruction includes, for example, a machine code made by a complier and a high-level language code executable by a computer using an interpreter or the like. When part or all of a base station or a relay is implemented as a computer program, the present invention includes a computer-readable recording medium storing the computer program.

## Claims

1. A gateway (200) connecting at least one user device (101, 102, 10M) to a plurality of cloud servers (301, 302, 30N) that provide different cloud services, the gateway comprising:
a memory unit including an information table (222) configured to store predefined Service Level Agreement, SLA, information provided from each of the plurality of cloud servers, wherein the SLA information comprises a service usage fee for each cloud server; and
a controller configured to:
receive a request for storing a content from a user device (101);
in response to receiving the request, select at least one of the cloud servers based on the SLA information; and
store the content provided from the user device on the selected at least one cloud server;
wherein the selection of the at least one of the plurality of cloud servers comprises selecting the at least one cloud server from the plurality of cloud servers in ascending order of the service usage fee.

2. The gateway of claim 1, wherein the information table is configured to store information relating to the service usage fee and a storage capacity with respect to each of the cloud servers.

3. The gateway of claim 2, wherein the controller is configured to select a next cloud in the ascending order if an available storage of the selected cloud server is smaller than a size of the content.

4. The gateway of claim 2, wherein the SLA information is generated and updated with a value which is entered by a user through the user device or provided from the cloud servers.

5. A method for operating a gateway connecting at least one user device (101, 102, 10M) to a plurality of cloud servers (301, 302, 30N) that provide different cloud services, the method comprising:
receiving a request for storing a content from a user device (101);
in response to receiving the request, selecting at least one of the cloud servers based on predefined Service Level Agreement, SLA, information provided from each of the plurality of cloud servers, wherein the SLA information comprises a service usage fee for each cloud server; and
storing the content provided from the user device, on the selected at least one cloud server;
wherein the selecting of the at least one of the cloud servers comprises selecting the at least one cloud server from the plurality of cloud servers in ascending order of the service usage fee.

6. The method of claim 5, wherein the information table is configured to store information of the service usage fee and a storage capacity with respect to each of the cloud servers.

7. The method of claim 6, wherein the selecting at least one of the cloud servers further comprises:
selecting next cloud in the ascending order if an available storage of the selected cloud server is smaller than a size of the content.

8. The method of claim 6, wherein the SLA information is generated and updated with a value which is entered by a user through the user device or provided from the cloud servers.

9. A gateway connecting at least one user device to a plurality of cloud servers that provide different cloud services, the gateway comprising:
a calculator configured to calculate a response time for each of the cloud servers in response to receiving a request for a content from a user device (101) ;
a verifier configured to verify cloud servers storing the content; and
a selector configured to select a cloud server in ascending order of the response time from the verified cloud servers storing the content, request the content stored to the selected cloud server, and provide the content to the user device.

10. The gateway of claim 9, further comprising:
a response time table configured to store response time for the cloud servers, and
a hash table configured to store information on the cloud servers storing content on the content basis,
wherein when the user device sends a request for the content, the selector is configured to select a cloud server from the cloud servers storing the requested content in ascending order of the response time, request a copy of the content stored to the selected cloud server, and provide the copy of the content to the user device.

11. The gateway of claim 10, the verifier comprising:
a hash table configured to store information of a response time between sending the request for content and receiving a response to the request;
a hash tree generator configured to generate a first hash tree using the content information; and
a hash tree verifier configured to request and receive content information to and from a corresponding cloud server upon receiving a request for content, generate a second hash tree using the received content information and content information of the hash tree verifier, and verify the cloud server by comparing the hash trees.

12. A method for operating a gateway connecting at least one user device to a plurality of cloud servers that provide different cloud services, the method comprising:
receiving a request for a content from a user device (101);
in response to receiving the request, calculating a response time for each of the cloud servers;
verifying cloud servers storing the content; and
selecting a cloud server from the verified cloud servers storing the requested content in ascending order of the response time;
requesting the content stored to the selected cloud server; and
providing the content to the user device.

13. The method of claim 12, wherein calculating a response time for each of the cloud servers comprises:
requesting a test content stored on the cloud servers at preset intervals; and
measuring the response time between sending a request for the test content stored on the cloud servers and receiving the test content until the test content is received.

14. The method of claim 13, wherein selecting a cloud server from the verified cloud servers comprises:
selecting the verified cloud server from the cloud servers storing the requested content in ascending order of the response time.

15. The method of claim 14, wherein the test content is stored on very newly connected cloud storage servers, and
wherein the content information received from the cloud servers comprises information of content copies and a hash function value of the information.

## Patentansprüche

1. Gateway (200), das zumindest eine Benutzervorrichtung (101, 102, 10M) mit einer Vielzahl von Cloud-Servern (301, 302, 30N) verbindet, die verschiedene Cloud-Dienste bereitstellen, wobei das Gateway Folgendes umfasst:
eine Speichereinheit, die eine Informationstabelle (222) beinhaltet, die konfiguriert ist, um vordefinierte Service-Level-Agreement-Informationen, SLA-Informationen, zu speichern, die von jedem aus der Vielzahl von Cloud-Servern bereitgestellt werden, wobei die SLA-Informationen eine Dienstnutzungsgebühr für jeden Cloud-Server umfassen; und
eine Steuerung, die für Folgendes konfiguriert ist:
Empfangen einer Anforderung zum Speichern eines Inhalts von einer Benutzervorrichtung (101);
als Reaktion auf das Empfangen der Anforderung, Auswählen von zumindest einem der Cloud-Server basierend auf den SLA-Informationen; und
Speichern des Inhalts, der von der Benutzervorrichtung bereitgestellt wird, auf dem ausgewählten zumindest einen Cloud-Server;
wobei die Auswahl des zumindest einen aus der Vielzahl von Cloud-Servern das Auswählen des zumindest einen Cloud-Servers aus der Vielzahl von Cloud-Servern in aufsteigender Reihenfolge der Dienstnutzungsgebühr umfasst.

2. Gateway nach Anspruch 1, wobei die Informationstabelle konfiguriert ist, um Informationen bezüglich der Dienstnutzungsgebühr und einer Speicherkapazität in Bezug auf jeden der Cloud-Server zu speichern.

3. Gateway nach Anspruch 2, wobei die Steuerung konfiguriert ist, um eine nächste Cloud in der aufsteigenden Reihenfolge auszuwählen, wenn ein verfügbarer Speicher des ausgewählten Cloud-Servers kleiner als eine Größe des Inhalts ist.

4. Gateway nach Anspruch 2, wobei die SLA-Informationen erzeugt und mit einem Wert aktualisiert werden, der von einem Benutzer über die Benutzervorrichtung eingegeben oder von den Cloud-Servern bereitgestellt wird.

5. Verfahren zum Betreiben eines Gateways, das zumindest eine Benutzervorrichtung (101, 102, 10M) mit einer Vielzahl von Cloud-Servern (301, 302, 30N) verbindet, die verschiedene Cloud-Dienste bereitstellen, wobei das Verfahren Folgendes umfasst:
Empfangen einer Anforderung zum Speichern eines Inhalts von einer Benutzervorrichtung (101);
als Reaktion auf das Empfangen der Anforderung, Auswählen von zumindest einem der Cloud-Server basierend auf vordefinierten Service-Level-Agreement-Informationen, SLA-Informationen, die von jedem aus der Vielzahl von Cloud-Servern bereitgestellt werden, wobei die SLA-Informationen eine Dienstnutzungsgebühr für jeden Cloud-Server umfassen; und
Speichern des Inhalts, der von der Benutzervorrichtung bereitgestellt wird, auf dem ausgewählten zumindest einen Cloud-Server;
wobei das Auswählen des zumindest einen der Cloud-Server das Auswählen des zumindest einen Cloud-Servers aus der Vielzahl von Cloud-Servern in aufsteigender Reihenfolge der Dienstnutzungsgebühr umfasst.

6. Verfahren nach Anspruch 5, wobei die Informationstabelle konfiguriert ist, um Informationen über die Dienstnutzungsgebühr und eine Speicherkapazität in Bezug auf jeden der Cloud-Server zu speichern.

7. Verfahren nach Anspruch 6, wobei das Auswählen von zumindest einem der Cloud-Server ferner Folgendes umfasst:
Auswählen der nächsten Cloud in der aufsteigenden Reihenfolge, wenn ein verfügbarer Speicher des ausgewählten Cloud-Servers kleiner als eine Größe des Inhalts ist.

8. Verfahren nach Anspruch 6, wobei die SLA-Informationen erzeugt und mit einem Wert aktualisiert werden, der von einem Benutzer über die Benutzervorrichtung eingegeben oder von den Cloud-Servern bereitgestellt wird.

9. Gateway, das zumindest eine Benutzervorrichtung mit einer Vielzahl von Cloud-Servern verbindet, die verschiedene Cloud-Dienste bereitstellen, wobei das Gateway Folgendes umfasst:
einen Rechner, der konfiguriert ist, um eine Reaktionszeit für jeden der Cloud-Server als Reaktion auf das Empfangen einer Anforderung eines Inhalts von einer Benutzervorrichtung (101) zu berechnen;
einen Verifizierer, der konfiguriert ist, um Cloud-Server zu verifizieren, die den Inhalt speichern; und
einen Selektor, der konfiguriert ist, um einen Cloud-Server in aufsteigender Reihenfolge der Reaktionszeit aus den verifizierten Cloud-Servern auszuwählen, die den Inhalt speichern, den Inhalt anzufordern, der in dem ausgewählten Cloud-Server gespeichert ist, und den Inhalt der Benutzervorrichtung bereitzustellen.

10. Gateway nach Anspruch 9, ferner umfassend:
eine Reaktionszeittabelle, die konfiguriert ist, um Reaktionszeit für die Cloud-Server zu speichern, und
eine Hash-Tabelle, die konfiguriert ist, um Informationen auf den Cloud-Servern zu speichern, die Inhalt auf der Inhaltsbasis speichern,
wobei, wenn die Benutzervorrichtung eine Anforderung des Inhalts sendet, der Selektor konfiguriert ist, um einen Cloud-Server aus den Cloud-Servern, die den angeforderten Inhalt speichern, in aufsteigender Reihenfolge der Reaktionszeit auszuwählen, eine Kopie des Inhalts anzufordern, der in dem ausgewählten Cloud-Server gespeichert ist, und die Kopie des Inhalts der Benutzervorrichtung bereitzustellen.

11. Gateway nach Anspruch 10, wobei der Verifizierer Folgendes umfasst:
eine Hash-Tabelle, die konfiguriert ist, um Informationen über eine Reaktionszeit zwischen dem Senden der Anforderung von Inhalt und dem Empfangen einer Reaktion auf die Anforderung zu speichern;
einen Hash-Baum-Generator, der konfiguriert ist, um einen ersten Hash-Baum unter Verwendung der Inhaltsinformationen zu erzeugen; und
einen Hash-Baum-Verifizierer, der konfiguriert ist, um Inhaltsinformationen von einem entsprechenden Cloud-Server beim Empfangen einer Anforderung von Inhalt anzufordern und zu empfangen, einen zweiten Hash-Baum unter Verwendung der empfangenen Inhaltsinformationen und Inhaltsinformationen des Hash-Baum-Verifizierers zu erzeugen und den Cloud-Server durch Vergleichen der Hash-Bäume zu verifizieren.

12. Verfahren zum Betreiben eines Gateways, das zumindest eine Benutzervorrichtung mit einer Vielzahl von Cloud-Servern verbindet, die verschiedene Cloud-Dienste bereitstellen, wobei das Verfahren Folgendes umfasst:
Empfangen einer Anforderung eines Inhalts von einer Benutzervorrichtung (101);
als Reaktion auf das Empfangen der Anforderung, Berechnen einer Reaktionszeit für jeden der Cloud-Server;
Verifizieren von Cloud-Servern, die den Inhalt speichern; und
Auswählen eines Cloud-Servers aus den verifizierten Cloud-Servern, die den angeforderten Inhalt speichern, in aufsteigender Reihenfolge der Reaktionszeit;
Anfordern des Inhalts, der in dem ausgewählten Cloud-Server gespeichert ist; und
Bereitstellen des Inhalts an die Benutzervorrichtung.

13. Verfahren nach Anspruch 12, wobei das Berechnen einer Reaktionszeit für jeden der Cloud-Server Folgendes umfasst:
Anfordern eines Testinhalts, der auf den Cloud-Servern gespeichert ist, in voreingestellten Intervallen; und
Messen der Reaktionszeit zwischen dem Senden einer Anforderung des Testinhalts, der auf den Cloud-Servern gespeichert ist, und dem Empfangen des Testinhalts, bis der Testinhalt empfangen ist.

14. Verfahren nach Anspruch 13, wobei das Auswählen eines Cloud-Servers aus den verifizierten Cloud-Servern Folgendes umfasst:
Auswählen des verifizierten Cloud-Servers aus den Cloud-Servern, die den angeforderten Inhalt speichern, in aufsteigender Reihenfolge der Reaktionszeit.

15. Verfahren nach Anspruch 14, wobei der Testinhalt auf ganz neu verbundenen Cloud-Speicherservern gespeichert wird, und
wobei die Inhaltsinformationen, die von den Cloud-Servern empfangen werden, Informationen über Inhaltskopien und einen Hash-Funktionswert der Informationen umfassen.

## Revendications

1. Passerelle (200) connectant au moins un dispositif utilisateur (101, 102, 10M) à une pluralité de serveurs en nuage (301, 302, 30N) qui fournissent différents services en nuage, la passerelle comprenant :
une unité de mémoire comprenant une table d'informations (222) configurée pour stocker des informations prédéfinies d'accord de niveau de service, SLA, fournies à partir de chacun de la pluralité de serveurs en nuage, lesdites informations SLA comprenant des frais d'utilisation de service pour chaque serveur en nuage ; et
un dispositif de commande configuré pour :
recevoir une demande de stockage d'un contenu en provenance d'un dispositif utilisateur (101) ;
en réponse à la réception de la demande, sélectionner au moins l'un des serveurs en nuage sur la base des informations SLA ; et
stocker le contenu fourni à partir du dispositif utilisateur sur le au moins un serveur en nuage sélectionné ;
ladite sélection du au moins un de la pluralité de serveurs en nuage comprenant la sélection du au moins un serveur en nuage parmi la pluralité de serveurs en nuage dans l'ordre croissant des frais d'utilisation de service.

2. Passerelle selon la revendication 1, ladite table d'informations étant configurée pour stocker des informations relatives aux frais d'utilisation de service et à une capacité de stockage par rapport à chacun des serveurs en nuage.

3. Passerelle selon la revendication 2, ledit dispositif de commande étant configuré pour sélectionner un nuage suivant dans l'ordre croissant si un stockage disponible du serveur de nuage sélectionné est inférieur à une taille du contenu.

4. Passerelle selon la revendication 2, lesdites informations SLA étant générées et mises à jour avec une valeur qui est entrée par un utilisateur par l'intermédiaire du dispositif utilisateur ou fournie à partir des serveurs en nuage.

5. Procédé permettant l'exploitation d'une passerelle connectant au moins un dispositif utilisateur (101, 102, 10M) à une pluralité de serveurs en nuage (301, 302, 30N) qui fournissent différents services en nuage, le procédé comprenant :
la réception d'une demande de stockage d'un contenu en provenance d'un dispositif utilisateur (101) ;
en réponse à la réception de la demande, la sélection d'au moins l'un des serveurs en nuage sur la base d'informations prédéfinies d'accord de niveau de service, SLA, fournies à partir de chacun de la pluralité de serveurs en nuage, lesdites informations SLA comprenant des frais d'utilisation de service pour chaque serveur en nuage ; et
le stockage du contenu fourni à partir du dispositif utilisateur, sur le au moins un serveur en nuage sélectionné ;
ladite sélection du au moins un des serveurs en nuage comprenant la sélection du au moins un serveur en nuage parmi la pluralité de serveurs en nuage dans l'ordre croissant des frais d'utilisation de service.

6. Procédé selon la revendication 5, ladite table d'informations étant configurée pour stocker des informations sur les frais d'utilisation de service et une capacité de stockage par rapport à chacun des serveurs en nuage.

7. Procédé selon la revendication 6, ladite sélection d'au moins un des serveurs en nuage comprenant en outre :
la sélection du nuage suivant dans l'ordre croissant si un stockage disponible du serveur en nuage sélectionné est inférieur à la taille du contenu.

8. Procédé selon la revendication 6, lesdites informations SLA étant générées et mises à jour avec une valeur qui est entrée par un utilisateur par l'intermédiaire du dispositif utilisateur ou fournie à partir des serveurs en nuage.

9. Passerelle connectant au moins un dispositif utilisateur à une pluralité de serveurs en nuage qui fournissent différents services en nuage, la passerelle comprenant :
un calculateur configuré pour calculer un temps de réponse pour chacun des serveurs en nuage en réponse à la réception d'une demande d'un contenu en provenance d'un dispositif utilisateur (101) ;
un vérificateur configuré pour vérifier les serveurs en nuage stockant le contenu ; et
un sélecteur configuré pour sélectionner un serveur en nuage dans l'ordre croissant du temps de réponse provenant des serveurs en nuage vérifiés stockant le contenu, demander le contenu stocké au serveur en nuage sélectionné et fournir le contenu au dispositif utilisateur.

10. Passerelle selon la revendication 9, comprenant en outre :
une table de temps de réponse configurée pour stocker le temps de réponse pour les serveurs en nuage, et
une table de hachage configurée pour stocker des informations sur les serveurs en nuage stockant le contenu sur la base du contenu,
lorsque le dispositif utilisateur envoie une demande pour le contenu, ledit sélecteur étant configuré pour sélectionner un serveur en nuage parmi les serveurs en nuage stockant le contenu demandé dans l'ordre croissant du temps de réponse, demander une copie du contenu stocké au serveur en nuage sélectionné, et fournir la copie du contenu au dispositif utilisateur.

11. Passerelle selon la revendication 10, le vérificateur comprenant :
une table de hachage configurée pour stocker des informations sur un temps de réponse entre l'envoi de la demande de contenu et la réception d'une réponse à la demande ;
un générateur d'arbre de hachage configuré pour générer un premier arbre de hachage à l'aide des informations de contenu ; et
un vérificateur d'arbre de hachage configuré pour demander et recevoir des informations de contenu à un serveur en nuage correspondant et en provenance de celui-ci lors de la réception d'une demande de contenu, générer un second arbre de hachage à l'aide des informations de contenu reçues et des informations de contenu du vérificateur d'arbre de hachage, et vérifier le serveur en nuage en comparant les arbres de hachage.

12. Procédé permettant l'exploitation d'une passerelle connectant au moins un dispositif utilisateur à une pluralité de serveurs en nuage qui fournissent différents services en nuage, le procédé comprenant :
la réception d'une demande d'un contenu en provenance d'un dispositif utilisateur (101) ;
en réponse à la réception de la demande, le calcul d'un temps de réponse pour chacun des serveurs en nuage ;
la vérification des serveurs en nuage stockant le contenu ; et
la sélection d'un serveur en nuage parmi les serveurs en nuage vérifiés stockant le contenu demandé dans l'ordre croissant du temps de réponse ;
la demande du contenu stocké au serveur en nuage sélectionné ; et
la fourniture du contenu au dispositif utilisateur.

13. Procédé selon la revendication 12, ledit calcul d'un temps de réponse pour chacun des serveurs en nuage comprenant :
la demande d'un contenu d'essai stocké sur les serveurs en nuage à des intervalles préétablis ; et
la mesure du temps de réponse entre l'envoi d'une demande pour le contenu d'essai stocké sur les serveurs en nuage et la réception du contenu d'essai jusqu'à ce que le contenu d'essai soit reçu.

14. Procédé selon la revendication 13, ladite sélection d'un serveur en nuage parmi les serveurs en nuage vérifiés comprenant :
la sélection du serveur en nuage vérifié parmi les serveurs en nuage stockant le contenu demandé dans l'ordre croissant du temps de réponse.

15. Procédé selon la revendication 14, ledit contenu d'essai étant stocké sur des serveurs de stockage en nuage très récemment connectés, et
lesdites informations de contenu reçues en provenance des serveurs en nuage comprenant des informations de copies de contenu et une valeur de fonction de hachage des informations.
